Europäisches Patentamt

(19) European Patent Office

Office européen des brevets

(11) Publication number: **0 114 388**
**B1**

(12) **EUROPEAN PATENT SPECIFICATION**

(45) Date of publication of patent specification: **17.10.90**

(21) Application number: **83113025.7**

(22) Date of filing: **23.12.83**

(51) Int. Cl.⁵: **B 29 D 5/00, A 44 B 19/12**

(54) **Apparatus for forming a row of zigzag coupling elements for slide fasteners.**

(30) Priority: **28.12.82 JP 234179/82**

(43) Date of publication of application:
**01.08.84 Bulletin 84/31**

(45) Publication of the grant of the patent:
**17.10.90 Bulletin 90/42**

(84) Designated Contracting States:
**BE DE FR IT NL**

(56) References cited:
**US-A-3 054 149**
**US-A-3 336 640**
**US-A-3 412 438**

(73) Proprietor: **YOSHIDA KOGYO K.K.**
**No. 1 Kanda Izumi-cho Chiyoda-ku**
**Tokyo (JP)**

(72) Inventor: **Takahashi, Kihei**
**1751, Daikoji**
**Uozu-shi Toyama-ken (JP)**
Inventor: **Sassa, Yusei**
**219-2, Takayanagi**
**Namerikawa-shi Toyama-ken (JP)**

(74) Representative: **Patentanwälte Leinweber &**
**Zimmermann**
**Rosental 7/II Aufg.**
**D-8000 München 2 (DE)**

Courier Press, Leamington Spa, England.

## Description

The present invention relates generally to the manufacture of slide fasteners and more particularly to an apparatus for forming a row of continuous zigzag coupling elements from a filament of thermoplastic material of the type disclosed in the first part of claim 1 of the accompanying claims and known by US-A-3 054 149.

Since the die wheel has a diameter much larger than the width of the groove, the groove is necessarily displaced slightly in the lateral direction when the die wheel is rotated. The apparatus disclosed in US-A-3 054 149 has no means for accomodating or taking up such lateral oscillation of the groove with the result that the working heads are brought out of accurate registry with the groove. The monofilament is liable to be unduly deformed or damaged by the working heads projecting into such oscillating groove. The coupling elements formed from such damaged filament cannot be used in effect for a slide fastener. From a point of view of the manufacturing costs it is advantageous if the die wheel can be fabricated with large tolerances. If the tolerances of the die wheel were excessively large there is the danger for the working heads, however, to no longer engage properly in the groove of the guide wheel and for the operation to be impeded. Such misoperations may be due to the fact, on the one hand, that one of the working heads is displaced laterally, i.e. parallel to the axis of the die wheel relative to the groove or that its distance from the periphery of the die wheel, i.e. radially of the axis thereof, deviates from the predetermined distance.

It is therefore an object of the present invention to improve the conventional apparatus in such a manner that larger tolerances of the die wheel are admissible without the operation being impeded.

According to the invention this object is achieved in that each of said working members is slidably movably supported on a bearing member in a direction parallel to the axis of said die wheel, that a clearance is provided between each of said working members and the corresponding bearing member, said clearance extending parallel to the axis of said die wheel, and that each of said bearing members is adjustably connected with a mounting member to adjust the distance between the corresponding working head and said groove in a direction perpendicular to the axis of said die wheel.

With this arrangement each of the working heads of the bending and punching units is adjustable in both depthwise and widthwise directions of the die wheel. Therefore the die wheel can be manufactured with considerable tolerances for keeping down the costs.

By the provision of a clearance between each of said working members and the corresponding bearing member each working head which is received in the die wheel's groove is freely movable in a direction parallel to the axis of the die wheel in response to groove variations. Thus a damage free accurate shaping of the thermoplastic monofilament can be achieved. This free-floating mechanism is highly advantageous because the thermoplastic monofilament becomes and remains soft when subjected to heat during formation of the coupling elements and hence such heated monofilament is susceptible to deformation even when subjected to a small external force such as a force supplied by a working head which is biased by a spring.

Many other advantages and features of the present invention will become manifest to those versed in the art upon making reference to the detailed description and the accompanying sheets of drawings in which a preferred structural embodiment incorporating the principles of the present invention is shown by way of illustrative example.

Figure 1 is a schematic front elevational view of an apparatus for forming a row of zigzag coupling elements according to the present invention;

Figure 2 is an enlarged side elevational view of a portion encircled by dots-and-dashes line II of Figure 1;

Figure 3 is a fragmentary cross-sectional view taken along line III III of Figure 2;

Figure 4 is an enlarged side elevational view, partly in cross section, of a bending unit of the apparatus shown in Figure 1;

Figure 5 is an enlarged view of a portion encircled by dots-and-dashes line V of Figure 4;

Figure 6 is an enlarged front elevational view, partly in cross section, of a punching unit of the apparatus shown in Figure 1;

Figure 7 is a cross-sectional view taken along line VII—VII of Figure 6;

Figure 8 is an exploded perspective view of a punch and a presser pad of the punching unit;

Figure 9 is an enlarged view of a portion encircled by dots-and-dashes line IX of Figure 7;

Figure 10 is an enlarged front elevational view of a hammering unit of the apparatus shown in Figure 1;

Figure 11 is a cross-sectional view taken along line XI—XI of Figure 10; and

Figure 12 is an enlarged view of a portion encircled by dots-and-dashes line XII of Figure 11.

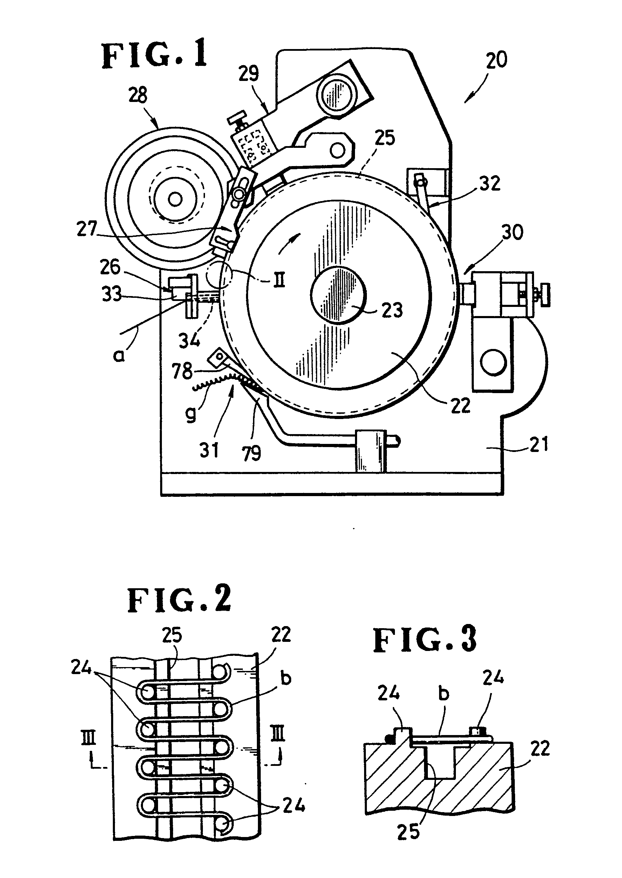

As shown in Figure 1, an apparatus 20 for forming a row of continuous zigzag coupling elements for slide fasteners, comprises a frame 21, and a die wheel 22 fixed to a shaft 23 rotatably mounted on the frame 21 and driven by a suitable drive means (not shown) to rotate the die wheel 22 intermittently in the clockwise direction. The die wheel 22 has two rows of circumferentially staggered pins 24, 24 disposed one on each side of a central groove 25 in the die wheel 22, as shown in Figures 2 and 3.

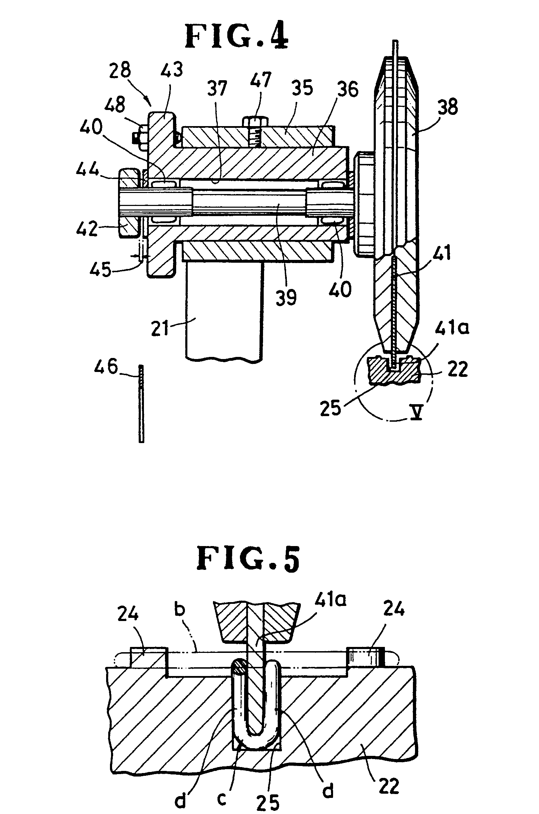

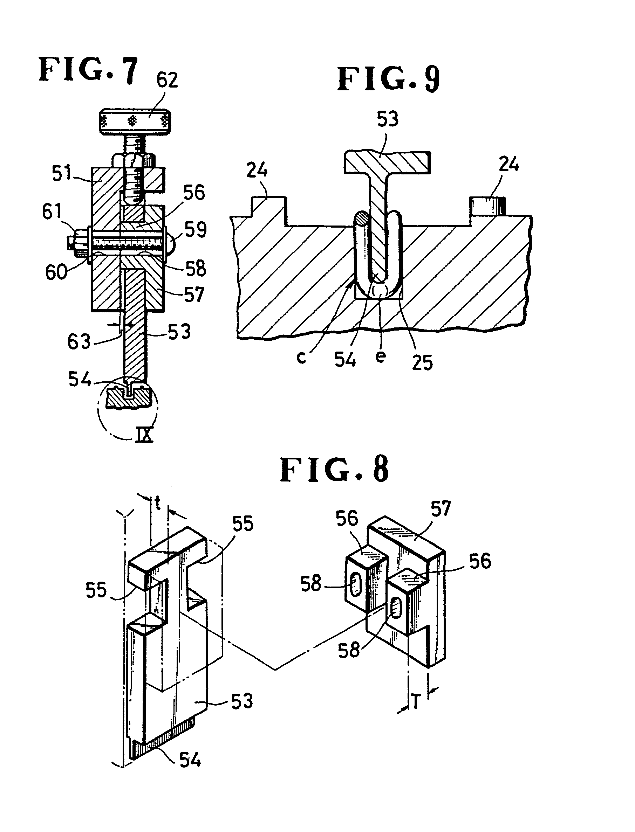

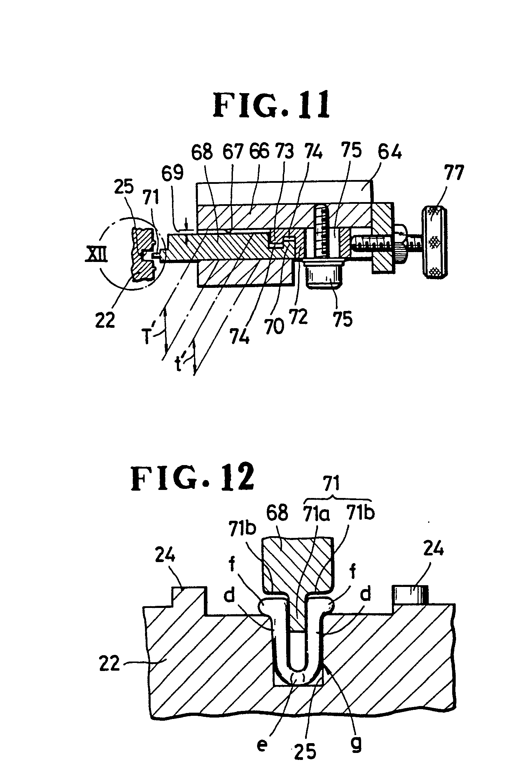

The apparatus 20 further includes a winding unit 26 for winding a filament a of thermoplastic material, such as a thermoplastic synthetic resin monofilament, alternately around the pins 24 across the groove 25 in a zigzag form (Figure 2), a lifting unit 27 for lifting up the zigzag filament b away from the pins 24, a bending unit 28 for

pushing the lifted zigzag filament b into the central groove 25 to form a row of zigzag coupling elements c having parallel legs d interconnected at their lower ends by lower connecting portions (Figure 5), a punching unit 29 for punching each connecting portion, to form a coupling head e having a pair of lateral projections (Figure 9), a hammering unit 30 for bending upper end portions of the parallel legs d laterally outwardly away from each other to form raised connecting portions f, f interconnecting adjacent coupling elements c (Figure 12), and a discharging unit 31 for removing formed coupling elements g from the die wheel 22, all units 26—31 being mounted on the frame 21 and disposed clockwise around the die wheel 22 in the described order, as shown in Figure 1. The die wheel 22 is heated by a suitable heating means such as an induction heating unit (not shown) to soften the thermoplastic filament a as the latter is processed on the die wheel 22. A detector 32 is also disposed on the frame 21 between the punching unit 29 and the pressing unit 30 for detecting a trailing end of the filament a to stop operation of the apparatus 20.

The hammering unit 30 may be omitted or kept deactivated when the filament a is formed into a row of zigzag coupling elements of the type having connecting portions extending in the same plane as the corresponding legs d, d.

The winding unit 26 includes a guide member 33 movable back and forth in the axial direction of the die wheel 22 across the central groove 25 and having a guide hole 34 for the passage therethrough of the filament a. In operation, the filament a is supplied from a bobbin (not shown) in the apparatus 20, in which the filament a passes through the guide hole 34. By moving the guide member 33 back and forth in a direction parallel to the axis of the die wheel 22 while the latter is being intermittently rotated clockwise as shown in Figure 1, the filament a is caused to extend alternately around the pins 24 across the central groove 25 as shown in Figure 2.

As shown in Figure 4, the bending unit 28 includes a tubular arm 35 fixed to the frame 21 and extending parallel to the axis of the die wheel 22, and a flanged holder 36 slidably rotatably received in the tubular arm 35 and having an eccentric bore 37 extending longitudinally therethrough. A bending roller 38 has a central shaft 39 extending through the bore 37 and rotatably mounted on the holder 36 via a pair of spaced needle bearings 40, 40 fitted in the bore 37. An annular disc 41 is supported on the roller 38 and has a peripheral edge portion 41a projecting from the periphery of the bending roll 38 and received in the central groove 25 in the die wheel 22, the peripheral portion 41a serving as a working head. The bending roller 38 and the annular disc 41 may be formed integrally with each other. A stop ring 42 is fixedly mounted on an end of the shaft 39 projecting from a flange 43 of the holder 34 remotely from the bending roller 38. A U-shaped spacer 44 is mounted on the shaft 39 between the stop ring 42 and the holder's flange 43, there being defined an annular clearance 45 between the stop ring 42 and the spacer 44. The amount of the clearance 45 can be varied by replacing the spacer 44 with another U-shaped spacer 46 having a different thickness. A lock bolt 47 is threaded radially into the arm 35 to fix the holder 36 in position to the arm 35. With the rock bolt 47 being loosed, the holder 36 is allowed to rotate in the arm 35 as well as to move axially in the arm 35. Due to the eccentric bore 37 in the holder 36, rotation of the holder 36 causes to vary a distance between the central axis of the bending roller 38 and the bottom of the central groove 25. By moving the holder 36 in the axial direction, the peripheral portion or working head 41a of the annular disc 41 can be positioned accurately in registry with the central groove 25 in the die wheel 22. The amount of axial movement to the holder 36 is changed by means of an adjusting bolt 48 threaded through the holder's flange 43 into abutting engagement with an end surface of the arm 35.

With this arrangement, the working head 41a is adjustable in both depthwise and widthwise directions of the central groove 25. Furthermore, with the clearance 45 provided between the stop ring 42 and the spacer 44, the shaft 39 is axially slidable and hence the working head 41a is movable in the widthwise direction of the central groove 25 to accomodate lateral oscillation of opposed sidewalls of the central groove 25 while the die wheel 22 is being rotated. Thus, the zigzag filament a can be bent into a row of zigzag coupling elements c including parallel legs d, d having the same length as shown in Figure 5.

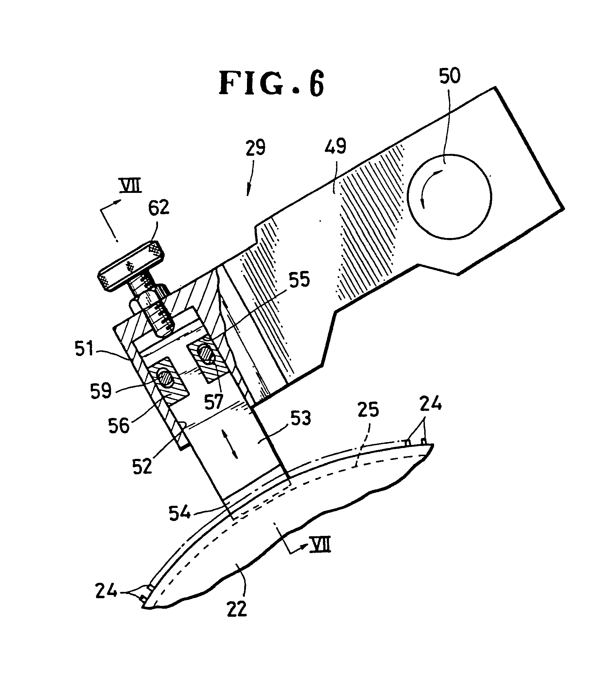

As shown in Figure 6 to 9, the punching unit 29 includes a rocking lever 49 supported at one end by a shaft 50 journaled on the frame 20 (Figure 1) and driven by a suitable drive means (not shown) to angularly move the rocking lever 49 toward and away from the die wheel 22. The rocking lever 49 supports on its free end a punch holder 51 in the shape of a rectangular hollow box with one side open and having a guide groove 52 in which a punch 53 is received. The punch 53 is generally in the shape of a rectangular plate and has at a lower end a working head 54 extending in registry with the central groove 25 in the die wheel 22. The punch 53 further has a pair of lateral recesses 55, 55 opening away from each other for respectively receiving therein a pair of projections 56, 56 on a presser pad 57. The presser pad 57 has a pair of oblong through-holes 58, 58 located in registry with the respective projections 56, 56 and extending in a direction parallel to the longitudinal axis of the punch 53. The punch 53 is mounted on the punch holder 51 by securing together the presser pad 57 and the punch holder 53 by means of screws 59 extending loosely through the oblong through-holes 58 and corresponding oblong through-holes 60 in the punch holder 51, and nuts 61 threaded on the screws 59, while the projections 56 on the presser pad 57 is received in the recesses 55. The punch 53 thus mounted is positionally adjustable in the longitudinal direction thereof. An adjusting bolt 62 is threaded through the punch holder 51 into the groove 52 and abuts against an upper end of the punch 53 to adjust the distance between the working head 54 and the central groove 25. As the projections 56 have a height T larger than the thickness t of the punch 53 as shown in Figure 8, a clearance 63 is defined between the punch holder 51 and the punch 53 mounted thereon as shown in Figure 7. The punch 53 is slidably movable on the projections 56 as the working head 54 is moved in the groove 25 in the widthwise direction thereof in agreement with the lateral oscillation of the groove 25. With this arrangement, a coupling head e is formed on a lower connecting portion of each coupling element c at accurate position as shown in Figure 8.

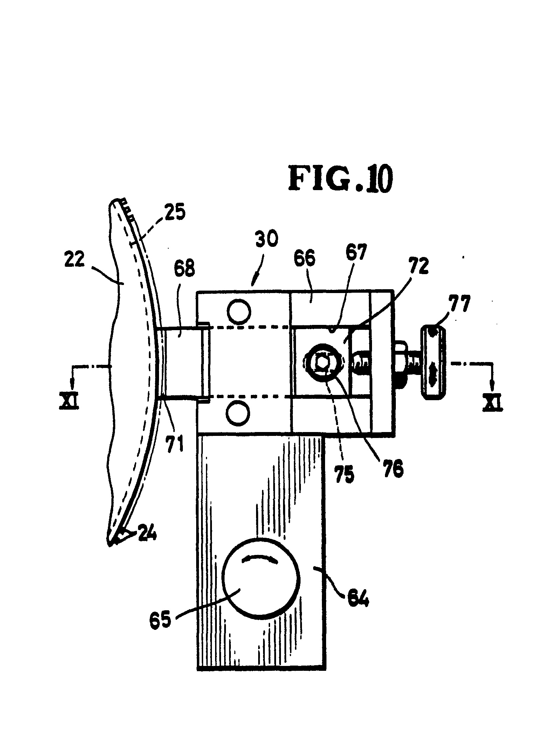

As shown in Figures 10 to 12, the hammering unit 30 includes a rocking arm 64 supported at one end by a shaft 65 journaled on the frame 20 (FIG. 1) and driven by a suitable drive means (not shown) to angularly move the rocking lever 64 toward and away from the die wheel 22. The rocking arm 64 supports on its free end a hammer holder 66 in the shape of a substantially hollow rectangular box having a longitudinal guide groove 67 in which a hammer 68 is received. The hammer 68 is in the form of a rectangular plate and has a maximum thickness t' which is smaller than the depth T' of the groove 67 so that there is defined a clearance 69 between the hammer 68 and the hammer holder 66, as shown in Figure 11. The hammer 68 has at opposite ends a locking portion 70 in the form of an upwardly directed hook and a working or hammering head 71 extending in registry with the central groove 25 in the die wheel 22. As shown in Figure 12, the hammering head 71 is composed of a central projection 71a and a pair of lateral shoulders 71b, 71b disposed one on each side of the projection 71a. The hammering head 71 has a maximum thickness larger than the width of the central groove 25 in the die wheel 22. A hammer support 72 is received in the groove 67 and has a locking end portion 73 in the form of a downwardly directed hook and held in locking engagement with the hook-shaped locking portion 70 of the hammer 68 with clearances 74 therebetween. The clearances 74 have a width substantially the same as or slightly larger than the width of the clearance 69. The hammer support 72 has an oblong through-hole 75 extending in a direction parallel to the longitudinal axis of the hammer 68A lock bolt 77 extends loosely through the oblong through-hole 76 and is threaded into the hammer holder 66 to thereby mount the hammer 68 on the holder 66. An adjusting bolt 77 is threaded through the hammer holder 66 and abuts against an end of the hammer support 72 remotely from the hook-shaped locking end portion 73 to adjust the distance between the hammering head 71 and the central groove 25 within the length of the oblong through-hole 75. With the clearance 69 defined between the holder 64 and the hammer 68, the working head 71 is movable to follow lateral oscillation of the central groove 25 in the die wheel 22 as the latter is rotated. The zigzag coupling elements c (Figure 12) is forced by the working head 71 to bend at upper portions of the respective legs d, d outwardly away from each other to form the raised connecting portions f, f having the same height.

As shown in Figure 1, the discharging unit 31 includes a tapered scraper 78 having a tip end (not shown) loosely received in the central groove 25 for removing the formed coupling elements g successively from the die wheel 21 as the latter is rotated. A nozzle 79 is disposed adjacent to the scraper 78 in confronting relation to the tip end, and ejects a cooling medium such as cold air for cooling the formed coupling elements g to set.

With the apparatus 20 thus constructed, the filament a is deformed reliably and accurately into the zigzag coupling elements g successively by the bending unit 28, punching unit 29, and the hammering unit 30 each having the working head 41a, 54, 71 which is allowed to move in harmony with the lateral oscillation of the groove 25 in the die wheel 22.

## Claims

1. An apparatus (20) for forming a row of continuous zigzag coupling elements (g) from a filament (a) of thermoplastic material, comprising a frame (21); a heated die wheel (22) mounted on said frame (21) and having a groove (25) in its peripheral surface, and a pair of rows of circumferentially staggered pins (24) disposed one on each side of said groove (25); a winding unit (26) for winding the filament (a) alternately around pins (24) across said groove (25) in a zigzag form (b); a lifting unit (27) for lifting up the zigzag filament (b) away from said pins (24); a bending unit (28) for pushing the lifted zigzag filament (b) into said groove (25) to form a row of zigzag coupling elements (c) having parallel legs (d) interconnected at one end by first connecting portions; a punching unit (29) for punching each of the connecting portions to form a coupling head (e); and a discharging unit (31) for removing formed coupling elements (g) from said die wheel (22), all said units (26—29 and 31) being disposed around the peripheral surface of said die wheel (22) in the described order, each of said bending and punching units (28, 29) having a working member (38; 53) including a working head (41a, 54) projectable into said groove (25), each of said working members (38, 53) being adjustably mounted in a direction perpendicular to the axis of the die wheel (22), characterized in that each of said working members (38, 53) is slidably movably supported on a bearing member (36, 57) in a direction parallel to the axis of said die wheel (22), that a clearance (45; 63) is provided between each of said working members (38, 53) and the corresponding bearing member (36, 57) said clearance (45; 63) extending parallel to the axis of said die wheel (22), and that each of said bearing members (36, 57) is adjustably connected with a mounting member (35, 51) to adjust the distance between the corresponding working head (41a; 54) and said groove (25) in a direction perpendicular to the axis of said die wheel (22).

2. An apparatus according to claim 1, said bending unit (28) including a tubular arm (35) forming said mounting member fixed to said frame (21), a holder (36) forming said bearing member slidably rotatably mounted in said tubular arm (35) and having a longitudinal bore (37), a bending roller (38) having said working head (41a) on its periphery and a central shaft (39) journaled on said holder (36), said shaft (39) extending through said bore (37) and having a portion projecting beyond one end of said holder (36), and a stop ring (42) releasably mounted on said portion of said shaft (39), said clearance (45) being defined between said stop ring (42) and said one end of said holder (36).

3. An apparatus according to claim 2, including a spacer ring (44, 46) mounted on said shaft (39) between said stop ring (42) and said one end of said holder (36).

4. An apparatus according to claim 2, said bore (37) being eccentric to the longitudinal central axis of said tubular arm (35).

5. An apparatus according to claim 2, said holder (36) including a flange (43) extending radially outwardly from said one end of said holder (36), an adjusting bolt (48) extending through said flange (43) into abutment with one end of said tubular arm (35).

6. An apparatus according to claim 1, said punching unit (29) including a rocking lever (49) pivotably supported on said frame (21) and rockingly movable toward and away from said die wheel (22), a punch holder (51) forming said mounting member mounted on a free end of said rocking lever (49) and having a guide groove (52) extending perpendicularly to the axis of said die wheel (22), a substantially rectangular punch (53) received in said guide groove (52) and having said working head (54) at one end thereof and a pair of lateral recesses (55) adjacent to the other end, and a presser pad (57) forming said bearing member secured to said holder (51) and having a pair of projections (56) receivable in said recesses (55), respectively, said projections (56) having a height larger than the thickness of said punch (53), said clearance (63) being defined between said punch (53) and said presser pad (57) parallel to the axis of said die wheel (22).

7. An apparatus according to claim 6, said presser pad (57) including an oblong through-hole (58) disposed in registry with each said projection (56) and extending in the longitudinal direction of said punch (53), a threaded fastener (59) extending through said oblong through-hole (58).

8. An apparatus according to claim 1, including a hammering unit (30) disposed between said punching unit (29) and said discharging unit (31) for hammering respective portions of the parallel legs (d) to form raised second connecting portions interconnecting adjacent coupling elements remotely from said first connecting portions, said hammering unit (30) including a rocking arm (64) pivotably supported on said frame (21) and rockingly movable toward and away from said die wheel (22), a hammer holder (66) forming said mounting member mounted on a free end of said rocking arm (64) and having a guide groove (67) extending perpendicularly to the axis of said die wheel (22), a substantially rectangular hammer (68) received in said guide groove (67) and having at opposite ends a working head (71) and a hook-shaped locking portion (70), and a hammer support (72) forming said bearing member received in said last-named guide groove (67) and secured to said holder (66), said support (72) having a hook-shaped end portion (73) held in locking engagement with said hook-shaped locking portion (70), said groove (67) having a depth larger than the thickness of said hammer (68), there being defined between said hammer (68) and said hammer holder (66) a clearance (69) extending in a direction parallel to the axis of said die wheel (22), said support (72) including an oblong through-hole (75) extending in the longitudinal direction of said hammer (68), a threaded fastener (76) extending through said last-named oblong through-hole (75).

## Patentansprüche

1. Vorrichtung (20) zur Ausbildung einer fortlaufenden Reihe zickzack-förmiger Kuppelglieder (g) aus einem Draht (a) aus thermoplastischem Material, umfassend einen Rahmen (21); ein geheiztes Gesenkrad (22), das auf dem Rahmen (21) gelagert ist und in seiner Umfangsfläche eine Nut (25) und zwei Reihen von in Umfangsrichtung versetzten Stiften (24) aufweist, die auf jeder Seite der Nut (25) angeordnet sind; eine Wickeleinheit (26) zum abwechselnden Herumwickeln des Drahtes (a) um die Stifte (24) quer zu der Nut (25) in Zickzackform (b); eine Abhebeeinheit (27) zum Abheben des zickzack-förmigen Drahtes (b) von den Stiften (24); eine Biegeeinheit (28) zum Hineindrücken des abgehobenen zickzack-förmigen Drahtes (b) in die Nut (25) um eine Reihe zickzackförmiger Kuppelglieder (c) zu bilden, die parallele Schenkel (d) haben, die an einem Ende durch erste Verbindungsbereiche verbunden sind; eine Staucheinheit (29) zum Stauchen jedes Verbindungsbereichs zur Ausbildung eines Kupplungskopfes (e); und eine Auswerfeinheit (31) zum Abnehmen der gebildeten Kuppelglieder (g) von dem Gesenkrad (22), wobei alle diese Einheiten (26—29 und 31) in der genannten Reihenfolge um die Umfangsfläche des Gesenkrades (22) herum angeordnet sind, wobei die Biege- und die Staucheinheit (28, 29) jeweils ein Arbeitsteil (38; 53) mit einem Arbeitskopf (41a, 54) haben, der in die Nut (25) hineinragen kann, wobei jedes dieser Arbeitsteile (38; 53) in einer zur Achse des Gesenkrades (22) rechtwinkligen Richtung einstellbar gelagert ist, dadurch gekennzeichnet, daß jedes dieser Arbeitsteile (38; 53) auf einem Lagerteil (36; 57) in einer zur Achse des Gesenkrades (22) parallelen Richtung verschiebbar abgestützt ist, daß zwischen jedem dieser Arbeitsteile (38; 53) und dem zugehörigen Lagerteil (36; 57) ein Zwischenraum (45; 63) vorgesehen ist, wobei sich dieser Zwischenraum (45; 63) parallel zur Achse des Gesenkrades (22) erstreckt und daß jedes dieser Lagerteile (36; 57) mit einem Tragteil (35; 51) einstellbar verbunden ist, um den Abstand zwischen dem zugehörigen Arbeitskopf (41a, 54) in der Nut (25) in einer zur Achse des Gesenkrades (22) rechtwinkligen Richtung einzustellen.

2. Vorrichtung nach Anspruch 1, wobei die Biegeeinheit (28) einen am Gehäuse (21) ortsfesten, das Tragteil bildenden rohrförmigen Arm (35), einen das Lagerteil bildenden Halter (36), der in dem rohrförmigen Arm (35) drehverschiebbar gelagert ist und eine Längsbohrung (37) aufweist, eine Biegerolle (38), die am Umfang den besagten Arbeitskopf (41a) aufweist und eine auf dem Halter (36) gelagerte zentrale Welle (39) aufweist, wobei sich die Welle (39) durch die Bohrung (37) erstreckt und einen über ein Ende des Halters (36) hinausragenden Bereich hat, und einen Anschlagring (42) umfaßt, der auf dem besagten Bereich der Welle (39) lösbar befestigt ist, wobei der Zwischenraum (45) zwischen dem Anschlagring (42) und dem besagten Ende des Halters (36) begrenzt ist.

3. Vorrichtung nach Anspruch 2, umfassend einen Distanzring (44, 46), der auf der Welle (39) zwischen dem Anschlagring (42) und dem besagten einen Ende des Halters (36) angeordnet ist.

4. Vorrichtung nach Anspruch 2, wobei die Bohrung (37) zur Längsachse des rohrförmigen Arms (35) exzentrisch ist.

5. Vorrichtung nach Anspruch 2, wobei der Halter (36) einen Flansch (43) hat, der sich von dem besagten einen Ende des Halters (36) radial nach außen erstreckt, und einen Einstellbolzen (48) umfaßt, der sich durch diesen Flansch (43) hindurch zur Anlage an einem Ende des rohrförmigen Arms (35) hindurch erstreckt.

6. Vorrichtung nach Anspruch 1, wobei die Staucheinheit (29) einen Schwinghebel (49), der auf dem Rahmen (21) schwenkbar gelagert und zu dem Gesenkrad (22) hin und von diesem weg hin- und herbewegbar ist, einen das Tragteil bildenden Stempelhalter (51), der an einem freien Ende des Schwinghebels (49) gelagert ist und eine sich zur Achse des Gesenkrades (22) rechtwinklig erstreckende Führungsnut (52) hat, einen im wesentlichen geraden Stempel (53), der in der Führungsnut angeordnet ist und an einem Ende den Arbeitskopf (54) und nahe dem anderen Ende zwei seitliche Ausnehmungen (55) aufweist, und ein das Lagerteil bildendes Andrückpolster (57) umfaßt, das an dem Halter (51) befestigt ist und zwei in die Ausnehmungen (55) einsetzbare Vorsprünge (56) hat, wobei die Höhe dieser Vorsprünge (56) geringfügig größer ist als die Dicke des Stempels (53), wobei der Zwischenraum (63) zwischen dem Stempel (53) und dem Andrückpolster (57) parallel zur Achse des Gesenkrades (22) begrenzt ist.

7. Vorrichtung nach Anspruch 6, wobei das Druckpolster (57) ein Langloch (58) aufweist, das mit jedem der besagten Vorsprünge (56) fluchtet und sich in Längsrichtung des Stempels (53) erstreckt, und eine das Langloch (58) durchsetzende Befestigungsschraube (59) umfaßt.

8. Vorrichtung nach Anspruch 1, umfassend eine Hammereinheit (30), die zwischen der Staucheinheit (29) und der Auswerfeinheit (31) angeordnet ist, um entsprechende Bereiche der parallelen Schenkel (d) zu hämmern, um erhabene zweite Verbindungsbereiche zu bilden, die benachbarte Kuppelglieder im Abstand von den ersten Verbindungsbereichen verbinden, wobei die Hammereinheit (30) einen Schwingarm (64), der auf dem Rahmen (21) schwenkbar gelagert und zu dem Gesenkrad (22) und von diesem weg hin- und herbewegbar ist, einen das Tragteil bildenden Hammerhalter (66), der an einem freien Ende des Schwingarms (64) angeordnet ist und eine sich rechtwinklig zur Achse des Gesenkrades (22) erstreckende Führungsnut (67) hat, einen im wesentlichen geraden Hammer (68), der in dieser Führungsnut (67) angeordnet ist und an gegenüberliegenden Enden einen Arbeitskopf (71) und einen hakenförmigen Verriegelungsbereich (70) hat, und einen das Lagerteil bildenden Hammersupport (72) umfaßt, der in der letztgenannten Führungsnut (67) angeordnet und an dem Halter (66) befestigt ist, wobei der Support (72) einen hakenförmigen Endbereich (73) hat, der mit dem hakenförmigen Verriegelungsbereich (70) in Verriegelungseingriff gehalten ist, wobei die Nut (67) eine die Dicke des Hammers (68) übersteigende Tiefe hat, wobei zwischen dem Hammer (68) und dem Hammerhalter (66) ein Spalt (69) begrenzt ist, der sich in einer Richtung parallel zur Achse des Gesenkrades (22) erstreckt, wobei der Support (72) ein Langloch (75) aufweist, das sich in Längsrichtung des Hammers (68) erstreckt, und eine das Langloch (75) durchsetzende Befestigungsschraube (76) umfaßt.

**Revendications**

1. Appareil (20) pour former une rangée d'éléments d'accouplement continus (g) en zigzag à partir d'un filament (a) de matière thermoplastique, comprenant un bâti (21); une roue formant matrice chauffée (22) montée sur ledit bâti (21) et ayant une gorge (25) dans sa surface périphérique, et deux rangées d'ergots (24) décalés sur le pourtour, disposées chacune sur un côté de ladite gorge (25); un dispositif d'enroulement (26) pour enrouler le filament (a) alternativement autour desdits ergots (24), en un zigzag (b) en travers de ladite gorge (25); un dispositif de levage (27) pour soulever le filament en zigzag (b) afin de le dégager desdits ergots (24); un dispositif de cambrage (28) pour pousser le filament en zigzag (b) soulevé dans ladite gorge (25) afin de former une rangée d'éléments d'accouplement (c) en zigzag ayant des branches parallèles (d) reliés entre eux, au niveau d'une première extrémité, par des premières parties de liaison; un dispositif d'estampage (29) pour estamper chacune des parties de liaison afin de former une tête d'accrochage (e); et un dispositif de déchargement (31) pour enlever de ladite roue formant matrice (22) les éléments d'accouplement (g) formés, tous lesdits dispositifs (26 à 29 et 31) étant disposés dans l'ordre décrit autour de la surface périphérique de ladite roue formant matrice (22), chacun desdits dispositifs de cambrage et d'estampage (28, 29) ayant un organe de travail (38; 53) comportant une tête de travail (41a, 54) pouvant faire saillie dans ladite gorge (25), chacun desdits organes de travail (38; 53) étant monté de manière réglable perpendiculairement à l'axe de la roue formant matrice (22), caractérisé en ce que chacun desdits organes de travail (38; 53) est supporté de manière à pouvoir se déplacer par coulissement sur un organe porteur (36; 57), parallèlement à l'axe de ladite roue formant matrice (22), en ce qu'un intervalle (45; 63) est ménagé entre chacun desdits organes de travail (38; 53) et l'organe porteur (36; 57) correspondant, ledit intervalle (45; 63) s'étendant parallèlement à l'axe de ladite roue formant matrice (22), et en ce que chacun desdits organes porteurs (36; 57) est relié d'une manière réglable à un élément de montage (35; 51) pour régler la distance entre la tête de travail (41a; 54) correspondante et ladite gorge (25) perpendiculairement à l'axe de ladite roue formant matrice (22).

2. Appareil selon la revendication 1, ledit dispositif de cambrage (28) comprenant un bras tubulaire (35) formant ledit élément de montage fixé audit bâti (21), un support (36) formant ledit organe porteur monté de manière à tourner en coulissant dans ledit bras tubulaire (35) et ayant un alésage longitudinal (37), un galet de cambrage (38) ayant ladite tête de travail (41a) sur sa périphérie et un arbre central (39) pivotant sur ledit support (36), ledit arbre (39) s'étendant à travers ledit alésage (37) et ayant une partie qui fait saillie au-delà d'une première extrémité dudit support (36), et une bague d'arrêt (42) montée de manière desserrable sur ladite partie dudit arbre (39), ledit intervalle (45) étant défini entre ladite bague d'arrêt (42) et ladite première extrémité dudit support (36).

3. Appareil selon la revendication 2, comprenant une bague entretoise (44, 46) montée sur ledit arbre (39) entre ladite bague d'arrêt (42) et ladite première extrémité dudit support (36).

4. Appareil selon la revendication 2, ledit alésage (37) étant excentré par rapport à l'axe longitudinal central dudit bras tubulaire (35).

5. Appareil selon la revendication 2, ledit support (36) comprenant un rebord (43) s'étendant radialement vers l'extérieur depuis ladite première extrémité dudit support (36), un boulon de réglage (48) s'étendant à travers ledit rebord (43) jusqu'à buter contre une première extrémité dudit bras tubulaire (35).

6. Appareil selon la revendication 1, ledit dispositif d'estampage (29) comprenant un levier basculeur (49) articulé sur ledit bâti (21) et, par basculement, rapprochable et éloignable de ladite roue formant matrice (22), un portepoinçon (51) formant ledit élément de montage monté sur une extrémité libre dudit levier basculeur (49) et ayant une rainure de guidage (52) qui s'étend perpendiculairement à l'axe de ladite roue formant matrice (22), un poinçon (53) sensiblement rectangulaire reçu dans ladite rainure de guidage (52) et ayant à une première extrémité de celui-ci ladite tête de travail (54) et, au voisinage immédiat de l'autre extrémité, une paire d'évidements latéraux (55), et un bloc presseur (57) formant ledit organe porteur fixé audit support (51) et ayant une paire de saillies (56) pouvant respectivement être reçues dans lesdits évidements (55), lesdites saillies (56) ayant une hauteur plus grande que l'épaisseur dudit poinçon (53), ledit intervalle (63) étant défini entre ledit poinçon (53) et ledit bloc presseur (57), parallèlement à l'axe de ladite roue formant matrice (22).

7. Appareil selon la revendication 6, ledit bloc presseur (57) comportant un trou traversant oblong (58) coïncidant avec chacune desdites saillies (56) et s'étendant dans le sens longitudinal dudit poinçon (53), une pièce de fixation filetée (59) s'étendant à travers ledit trou traversant oblong (58).

8. Appareil selon la revendication 1, comprenant un dispositif de martelage (30) disposé entre ledit dispositif d'estampage (29) et ledit dispositif de déchargement (31) pour marteler des parties correspondantes des branches parallèles (d) afin de former des secondes parties de liaison en relief reliant l'un à l'autre les éléments d'accouplement contigus à distance desdites premières parties de liaison, ledit dispositif de martelage (30) comportant un bras basculeur (64) articulé sur ledit bâti (21) et, par basculement, rapprochable et éloignable de ladite roue formant matrice (22), un porte-marteau (66) formant ledit élément de montage monté sur une extrémité libre dudit bras basculeur (64) et ayant une rainure de guidage (67) qui s'étend perpendiculairement à l'axe de ladite roue formant matrice (22), un marteau (68) sensiblement rectangulaire reçu dans ladite rainure de guidage (67) et ayant à ses extrémités opposées une tête de travail (71) et une pièce de verrouillage (70) en forme de crochet, et un support (72) de marteau formant ledit élément porteur reçu dans ladite rainure de guidage (67) qui vient d'être évoquée et fixé audit porte-marteau (66), ledit support (72) avant une partie terminale (73) en forme de crochet maintenue accrochée avec ladite pièce de verrouillage (70) en forme de crochet, ladite rainure (67) ayant une profondeur supérieure à l'épaisseur dudit marteau (68), un intervalle (69) défini entre ledit marteau (68) et ledit porte-marteau (66) s'étendant parallèlement à l'axe de ladite roue formant matrice (22), ledit support (72) comportant un trou traversant oblong (75) s'étendant dans le sens longitudinal dudit marteau (68), une pièce de fixation filetée (76) s'étendant à travers ledit trou traversant oblong (75) qui vient d'être cité.

# FIG. 1

# FIG. 2

# FIG. 3

1

# FIG.4

# FIG.5

# FIG. 6

# FIG.7

62
51
56
61
59
60
58
57
63
53
54
IX

# FIG.9

53
24
24
c
54
e
25

# FIG.8

t
55
55
55
53
54
56
57
56
58
58
58
T

# FIG.10

# FIG. 11

# FIG. 12